# EUROPEAN PATENT SPECIFICATION

(11) **EP 1 731 572 B1**
(45) Date of publication and mention of the grant of the patent: **29.06.2016**
(21) Application number: 05728000.0
(22) Date of filing: 31.03.2005
(51) Int. Cl.: C08L 101/02, C08L 83/04, C09K 3/10, C09J 183/04, C09J 133/04, C09J 5/00, C09J 201/02, C08F 220/18, C09J 133/14, C08L 33/14, C08F 220/28, C08L 33/04, C08G 77/12, C08G 77/20

(54) **CURABLE COMPOSITION AND SEALING METHOD**
HÄRTENDE ZUSAMMENSETZUNG UND VERSIEGELUNGSVERFAHREN
COMPOSITION DURCISSEUR ET PROCÉDE D'ETANCHEISATION

(30) Priority: 01.04.2004 JP 2004109039
(43) Date of publication of application: 13.12.2006
(73) Proprietor: ThreeBond Fine Chemical Co., Ltd., Sagamihara-shi Kanagawa 252-0146 (JP)
(72) Inventor: TANAKA, Masayuki c/o Three Bond Co., Ltd,, Tokyo 193-8533 (JP); HOSOGI, Satoshi c/o Three Bond Co., Ltd,, Tokyo 193-8533 (JP)
(74) Representative: Grünecker Patent- und Rechtsanwälte PartG mbB
(86) International application number: PCT/JP2005/006323
(87) International publication number: WO 2005/095520

(56) References cited:
- JP-A- 2000 038 510
- JP-A- 2000 154 370
- JP-A- 2000 328 042
- JP-A- 2003 055 553
- JP-A- 2004 030 236
- US-A- 5 449 560
- US-A1- 2003 166 739
- US-A1- 2003 166 795
- US-A1- 2008 315 148

## Description

### Technical Field

The present invention relates to a curable composition, which is suitable for on-site forming gasket applications, and more particularly to a curable composition mainly comprising a reaction curing type (meth)acrylic acid-based polymer and excellent in oil resistance, heat resistance and the like, particularly good in compression set resistance, and also relates to a sealing method using the composition.

### Background Art

For automotive parts, electrical parts and the like, it becomes necessary to seal the inside and outside in some cases, in order to prevent internal liquid and gas from leaking outward, or to the contrary, in order to prevent external liquid, gas, dirt and the like from entering inward. Usually, tight seal or sealing can be obtained by bringing members into close contact with each other. However, when hard ones are brought into close contact with each other, it is difficult to obtain an effective sealing effect. In that case, a member such as a relatively soft sheet such as a packing or a gasket is put therebetween, and pressure contact is performed. At this time, a portion to be brought into abutting contact is usually called a flange. This packing or solid gasket is formed by die molding of paper, cork, rubber or the like or stamping of a sheet.

The above-mentioned packing or solid gasket is required for each form of a part to be sealed, so that there are disadvantages of the increased number of parts and the difficulty of automating incorporation into a part to be sealed, although this is a well-known problem. Accordingly, on-site forming gaskets have been abundantly used in which a liquid sealing member is applied to a flange portion of a part to be sealed, and cured. The on-site forming gaskets are roughly classified into three types. The first is a mold in-place gasket (MIPG) method comprising previously bringing a mold into pressure contact with a flange of a part to be sealed, injecting a liquid sealing member such as a heat curable silicone into a cavity formed between the mold and the flange, and curing it to form a gasket, the second is a formed in-place gasket (FIPG) method comprising automatically applying a liquid sealing agent such as a room-temperature (moisture) curable or two-component mixing curable silicone to a flange of a part to be sealed, bringing a flange of another part to be sealed into pressure contact therewith, and aging it for a specified time to cure the liquid sealing agent between the flanges, and the third is a cured in-place gasket (CIPG) method comprising applying a liquid sealing agent such as a two-component mixing curable or room-temperature (moisture) curable silicone in bead form, and aging or heating it as such for a specified time to form a sealed portion.

The MIPG requires the preparation of a mold for each part to be sealed, so that it is not adequate to small-lot large item products. Moreover, a production technique for preventing the occurrence of burrs is also not easy. The FIPG is easily automated, and in curing and aging, the parts can be allowed to stand as they are combined in many cases. Accordingly, it is excellent in productivity. However, the flanges of the parts to be sealed are laminated at the time when curing has not been caused, so that a sealing layer formed or the sealing agent between the flanges becomes a thin film. This is as the flanges are adhered to each other, and shows extremely high seal pressure resistance. On the other hand, one used under severe conditions such as high-temperature conditions or violently vibrating conditions has the possibility that the sealing layer is broken or the possibility that separation occurs at an interface between the sealing agent and the flange. Accordingly, the use in such a portion has come to be feared. The CIPG comprises forming the sealing agent in bead form, and bringing it into pressure contact with the flange of another member to be sealed. Sealing properties have been maintained by repulsive force generated from elasticity of the sealing agent. For that reason, in order to exhibit a long-term sealing effect, it has been necessary that repulsive force is maintained for a long time, that is to say, that a sealing agent having low compression set is used.

The sealing agent used in the above-mentioned on-site forming gasket is practically one containing an organopolysiloxane as a main component. The organopolysiloxane is referred to as a so-called silicone resin, and excellent in heat resistance and handleability. Many prior art documents including patent document 1 and patent document 2 have been published.
Patent Document 1: JP-A-63-251488
Patent Document 2: JP-A-5-246456

However, in recent years, in portions such as an engine portion in which an engine oil, a gear oil or the like must be sealed at high temperatures, portions have increased in which an oil containing a local pressure additive in increased amounts is used in order to improve lubricating performance. When the silicone resin is used in this site, there has come to cause the problem that the local pressure additive contained in the oil breaks the bond of the organopolysiloxane to deteriorate the sealing agent. In particular, in the CIPG, the seal form is in bead form, so that the area which contacts with the oil is large, and the possibility of being deteriorated is high. Accordingly, as described in patent document 3, there is proposed a sealing agent using a so-called acrylic rubber in which an acrylic ester is copolymerized, without using the silicone resin. The acrylic rubber is little deteriorated by the local pressure additive, compared to the silicone resin, and useful to such a portion. However, the acrylic rubber represented by patent document 3 is solid at ordinary temperature, so that it can only be used as a solid packing, and has not been able to be readily used in a technique of applying a liquid material and curing it, such as the FIPG or the CIPG.

Patent Document 3: JP-A-8-284746

On the other hand, from long ago, there has been proposed a technique of adding a reactive functional group into a molecule of a relatively low molecular weight copolymer of an acrylic ester and reacting the reactive functional group, thereby performing curing. That is described in patent document 4 and the like. When a composition described in patent document 4 is used, it can be easily applied, because it is liquid at the time of coating, and when it is cured, oil resistance of the acrylic rubber is exhibited. It is therefore an extremely useful composition. However, it is practically difficult to selectively add the reactive functional group in a copolymerization reaction of the acrylic ester, and such a resin has not commercially come in practice. In recent years, reactive liquid acrylic rubbers have been developed by methods described in patent documents 5 to 8 and the like, resulting in the possibility of practical use.
Patent Document 4: JP-A-61-133201
Patent Document 5: JP-A-11-80250
Patent Document 6: JP-A-2000-38404
Patent Document 7: JP-A-2001-271055
Patent Document 8: JP-A-2002-69121

When the resin compositions described in patent documents 4 to 8 are applied to the on-site forming gasket of the CIPG method, it is excellent in oil resistance, and the above-mentioned problems are solved. However, compared to the conventional silicone resins, compression set is high, so that there has arisen the disadvantage that repulsive force of the flange to pressure contact decreases with time to deteriorate sealing properties with time. Further, there has also arisen the disadvantage that a sweating phenomenon occurs. The sweating phenomenon as used herein is a phenomenon in which a liquid to be sealed, such as an engine oil, comes into contact with the sealing agent, penetrates into the sealing agent, and passes through the sealing agent to reach the outside, thereby oozing out as the sealing agent has sweated. The amount of leakage by the sweating phenomenon is extremely slight, so that there does not arise such a problem that the inner pressure varies or that the amount of the liquid to be sealed decreases. However, dirt such as powder dust and dust becomes easy to adhere to the sealing agent in which the sweating phenomenon has occurred, which impairs the appearance of a product. Not only it, but also this has hindered early detection of leakage of contents caused by a defect of the sealing agent itself, because it is difficult to be distinguished from oil leakage due to poor sealing. Accordingly, one improved in the above-mentioned problems has been desired.
JP 2004 030236 A discloses as adhesive composition a liquid resin of polyisobutylene with one or more alkenyl groups having a number average molecular weight of 500-300000, a hydrocarbon with hydrosilyl groups is present and a hydrosilylation catalyst.
US 2004/030236 A1 describes a curable composition comprising a liquid base polymer, a silicone elastomer and a silane crosslinking agent, which can be used as waterproof seals for rubber, transparent resin or glass gasket materials, as well as for repairing materials for toys etc.
US 5 449 560 A discloses a liquid curable composition containing a polydiorganosiloxane with alkenyl groups (A), a polyhydrogenorganosiloxane (B), a catalyst (C) and a particulate filler (D), which may be employed as interlayer materials for use in fire and impact resistant safety glass structures.
US 2003/166795 A1 describes a curable composition comprising a vinyl polymer, a hydrosilyl group-containing compound, a hydrosilylation catalyst, an aliphatic compound and an amine compound.

### Disclosure of the Invention

### Problems That the Invention Is to Solve

The invention has been made in order to solve the above-mentioned problems in the background art, and an object of the invention is to provide a curable composition which is a composition containing as a main component a (meth)acrylic acid-based copolymer which is liquid at ordinary temperature before curing, cures for a short period of time, and is excellent in heat resistance, oil resistance and compression set resistance after curing. Accordingly, the present invention provides a curable sealing composition according to claim 1. Preferred embodiments are defined in the subclaims 2 to 6 as well as in the description.

Further, another object of the invention is to provide a sealing method according to claim 7 for effectively sealing using the above-mentioned curable composition.

### Means for Solving the Problems

That is to say, the invention relates to a curable composition comprising (a) a (meth)acrylic acid-based polymer containing, in its molecule, at least one alkenyl group which can be hydrosilylated, and having a number average molecular weight of 500 to 1,000,000, (b) an organohydrogenpolysiloxane and (c) a silicone powder.

Further, the invention also relates to a sealing method comprising the steps of applying the above-mentioned curable composition to at least one side of an article to be sealed, curing the above-mentioned composition at 80 °C to 150 °C after coating, and then, subjecting it to pressure contact with another article to be sealed.

### Advantage of the Invention

The invention is a curable composition which is good in oil resistance, chemical resistance and heat resistance. It is excellent in on-site forming performance, and low in compression set which has been a conventional problem. Further, it is one in which the sweating phenomenon does not occur, and can be used without deteriorating sealing performance for a long period of time even in high-temperature environment.

### Best Mode for Carrying Out the Invention

The invention will be described in detail below. The (meth)arylic acid-based polymer containing, in its molecule, at least one alkenyl group which can be hydrosilylated, and having a number average molecular weight of 500 to 1,000,000, which is component (a) of the invention, is a copolymer in which a main chain is a (meth)arylic acid-based compound and an alkenyl group is attached to a molecular terminal or a molecular chain. Detailed production methods of this component are described in the above-mentioned patent documents 4 to 8, and these can be utilized.

The (meth)arylic acid-based monomer constituting the main chain of (meth)arylic acid-based polymer (a) of the invention is not particularly limited, and various ones may be used. Examples thereof include (meth)acrylic acid-based monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)-acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, an ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate and 2-perfluorohexadecylethyl. These may be used alone, or a plurality thereof may be copolymerized. From physical properties of a product, (meth)acrylic acid-based monomers are preferred among others. More preferred are an acrylic acid ester monomer and a methacrylic acid ester monomer, particularly preferred is an acrylic acid ester monomer, and still more preferred is butyl acrylate. In the invention, the above-mentioned monomer may be copolymerized and further block copolymerized with another monomer. In that case, the above-mentioned monomer is preferably contained in an amount of 40% or more by weight ratio. In the above-mentioned expressive form, for example, (meth)acrylic acid expresses acrylic acid and/or methacrylic acid.

The number average molecular weight of the (meth)acrylic acid-based polymer of the invention is within the range of 500 to 1,000,000, and more preferably from 1000 to 100,000. When the molecular weight is less than 500, the existential amount of hydrosilyl bonds in a cured material increases, which makes it difficult to express the original characteristics of the (meth)acrylic acid-based polymer. On the other hand, more than 1,000,000 results in an increase in viscosity, which causes the difficulty of handling in liquid form, such as the difficulty of dispense coating.

The (meth)acrylic acid-based polymer can be obtained by various polymerization methods, and the methods are not particularly limited. However, radical polymerization methods are preferred in terms of the versatility of the monomer and the easiness of control. Of the radical polymerization methods, controlled radical polymerization is preferred, living radical polymerization is more preferred, and atom transfer radical polymerization is particularly preferred. These methods are already known methods and described in detail in the above-mentioned patent documents 4 to 8.

The alkenyl group which component (a) of the invention has is not limited, as long as it is one at which hydrosilyl reaction takes place. However, it is preferably one represented by H₂C=C(R¹)-.

In the above-mentioned formula, R¹ is hydrogen or an organic group having 1 to 20 carbon atoms. Although the organic group having 1 to 20 carbon atoms is not particularly limited, it is preferably an alkyl group having 1 to 20 carbon atoms, an aryl group having 6 to 20 carbon atoms or an aralkyl group having 7 to 20 carbon atoms. Specifically, there are exemplified the following groups : - -(CH₂)ₙ-CH₃, -CH(CH₃)-(CH₂)ₙ-CH₃, -CH(CH₂CH₃)-(CH₂)ₙ-CH₃, -CH(CH₂CH₃)₂, -CH(CH₃)₂-(CH₂)ₙ-CH₃, -C(CH₃)(CH₂CH₃)-(CH₂)ₙ-CH₃, -C₆H₅, -C₆H₄(CH₃), -C₆H₃(CH₃)₂, - (CH2) ₙ-C₆H₅,-(CH₂)ₙ-C₆H₄(CH₃) and -(CH₂)ₙ-C₆H₃(CH₃)₂(n is an integer of 0 or more, and the total carbon number of the respective groups is 20 or less). Of these, R¹ is more preferably hydrogen or a methyl group.

The bond form of the alkenyl group and the main chain of the (meth)acrylic acid-based polymer is not particularly limited. However, it is preferred that they are bonded through a carbon-carbon bond, an ester bond, an ether bond, a carbonate bond, an amide bond, a urethane bond or the like. When rubbery properties are particularly required in the cured material of the curable composition of the invention, one having all alkenyl groups at molecular chain terminals is more preferred, rather than one having at least one of the alkenyl groups at a molecular chain terminal, because the molecular weight between crosslinking points which greatly influences rubber elasticity can be largely taken.

Methods for introducing the alkenyl group into the vinyl-based polymer include the following methods.
(1) A method of reacting as a second monomer a compound having both an alkenyl group low in polymerizability and an alkenyl group relatively high in polymerizability in one molecule, when the vinyl-based polymer is synthesized by radical polymerization, preferably living radical polymerization.
(2) A method of reacting a compound having at least two alkenyl groups low in polymerizability, for example, such as 1,5-hexadiene, 1,7-octadiene or 1,9-decadiene, in an end stage of the polymerization reaction or after the end of the reaction of a specified monomer, when the vinyl-based polymer is synthesized by living radical polymerization.
(3) A method of reacting various organic metal compounds having an alkenyl group, for example, such as allyltributyltin and allyltrioctyltin, with a vinyl-based polymer having at least one carbon-halogen bond having high reactivity, thereby substituting halogen.
(4) A method of reacting a stabilized carbanion having an alkenyl group with a vinyl-based polymer having at least one carbon-halogen bond having high reactivity, thereby substituting halogen.
(5) A method of allowing a metal element such as zinc or an organic metal compound to act on a vinyl-based polymer having at least one carbon-halogen bond having high reactivity to prepare an enolate anion, and then, reacting it with an alkenyl group-containing electrophilic compound such as an alkenyl group-containing compound having a leaving group such as halogen or an acetyl group, a carbonyl compound having an alkenyl group, an isocyanate compound having an alkenyl group or an acid halide having an alkenyl group.
(6) A method of reacting an alkenyl group-containing oxyanion or carboxylate anion with a vinyl-based polymer having at least one carbon-halogen bond having high reactivity, thereby substituting halogen.
(7) A method of reacting an alkenyl group-containing halide, an alkenyl group-containing isocyanate compound, an alkenyl group-containing carboxylic acid or an alkenyl group-containing acid halide with a hydroxyl group of a vinyl-based polymer having at least one hydroxyl group, or a method of reacting a diisocyanate with the above-mentioned hydroxyl group, and further reacting a compound containing a hydroxyl group and an alkenyl group.

Of these, the methods of (2), (6) and (7) are preferred in that control is easier. These methods are described in detail in the above-mentioned patent documents 4 to 8.

There is no particular limitation on the organohydrogenpolysiloxane of component (b) of the invention, as long as it is a organohydrogenpolysiloxane which can be cured by crosslinking with a vinyl-based polymer having at least one alkenyl group of component (a), and various ones may be used. However, preferred is an organohydrogenpolysiloxane, which is a silicone containing, in its molecule, a silicon atom to which a hydrogen atom is directly bonded and composed of a straight-chain, branched, cyclic or net-like molecule. Preferred are those having, in their molecules, preferably two or more silicon atoms to each of which a hydrogen atom is directly bonded.

A substituent group other than the hydrogen atom, which is bonded to the silicon atom of component (b), is preferably an alkyl group having 1 to 6 carbon atoms or a phenyl group, but may be another one. The amount of this component (b) added is usually an amount giving 0.5 to 1.5 equivalents, and preferably an amount giving 0.8 to 1.2 equivalents, based on one alkenyl group contained in component (a). In the case of less than 0.5 equivalent, the crosslinking density tends to excessively decrease, and in the case of more than 1.5 equivalents, the problem of foaming caused by dehydrogenation reaction tends to occur, or heat resistance tends to be influenced.

Such an organohydrogenpolysiloxane is easily obtained by known production methods. In general, for example, tetrahydrotetramethylcyclotetrasiloxane and/or octamethylcyclotetrasiloxane and a compound having a (CH₃)₃SiO_{1/2} unit and/or a (CH₃)₂SiO_{1/2} unit which become terminal groups are equilibrated at about -10 to +40°C under the presence of a catalyst such as sulfuric acid, trifluoromethanesulfonic acid or methanesulfonic acid, thereby being able to produce the organohydrogenpolysiloxane.

Component (a) and component (b) of the invention can be mixed at any ratio. However, from the point of curability, the molar ratio of alkenyl group and hydrosilyl group is preferably within the range of 5 to 0.2, and further, particularly preferably from 2.5 to 0.4. When the molar ratio is 5 or more, curing is insufficient, and only a cured material having low strength tends to be obtained. On the other hand, less than 0.2 results in a tendency of active hydroxyl groups to remain in large amounts in a cured material after curing, which causes the occurrence of cracks and voids, so that there is a fear of failing to obtain a homogeneous and strong cured material.

Silicone powder (c) of the invention includes a three-dimensionally crosslinked silicone resin and fine spherical particles of a silicone resin. These are one obtained by spheroidizing a three-dimensionally crosslinked high molecular weight organopolysiloxane having a molecular weight of thousands to hundreds of thousands by pulverization or the like, and one having a particle size of 0.1 to 50 µm is used. As this component (c), there can be used, for example, Trefil E-500, E-501, E-600, E-601, E-602, E-603 or the like manufactured by Dow Corning Toray Co., Ltd., or Tospearl 105, 120, 130, 145, 3120, 200B or the like manufactured by Toshiba Silicone Co., Ltd.

Component (c) substantially improves compression set resistance of the cured material of the curable composition of the invention. That is to say, compression set can be reduced. Moreover, not only it, but also the sweating phenomenon which occurs when the curable composition is used in an oil portion is substantially decreased. The amount of component (c) added is preferably from 5 to 30 parts by weight based on 100 parts by weight of component (a). Less than 5 parts by weight results in a tendency of compression set resistance to decrease. More than 30 parts by weight results in not only a reduction in toughness of the cured material, but conversely a tendency of seating properties to deteriorate.

In the curable composition of the invention, it is preferred to further use a hydrosilylation catalyst for accelerating the reaction of component (a) and component (b). There is no particular limitation on the hydrosilylation catalyst, and any one can be used. Examples thereof include radical initiators such as an organic peroxide and an azo compound, and transition metal catalysts. Of these, the transition metal catalysts are preferred from good reactivity.

Specific examples of the transition metal catalysts include a platinum element, one in which a platinum solid is carried on a carrier such as alumina, silica or carbon black; chloroplatinic acid; a complex of chloroplatinic acid and an alcohol, an aldehyde, a ketone or the like; a platinum-olefin complex, a platinum-vinylsiloxane complex such as Ptₙ(ViMe₂SiOSiMe₂Vi)ₙ or Pt[(MeViSiO)₄]ₘ; a platinum-phosphine complex such as Pt(PPh₃)₄ or Pt(PBu₃)₄; a platinum-phosphite complex such as Pt[P(OPh)₃]₄ or Pt[P(OBu)₃]₄ and Pt(acac)₂ (in the formulas, Me represents a methyl group, Bu represents a butyl group, Vi represents a vinyl group, Ph represents a phenyl group, and n and m represent integers). Further, they also include a platinum-hydrocarbon complex described in Ashby et al., US patents 3159601 and 3159602, and a platinum alcoholate catalyst described in Lamoreaux et al., US Patent 3220972.

Further, examples of the catalysts other than the platinum compounds include RhCl(PPh₃)₃, RhCl₃, Rh/Al₂O₃, RuCl₃, IrCl₃, FeCl₃, AlCl₃, PdCl₂·xH₂O, NiCl₂, TiCl₄ and the like. These catalysts may be used either alone or as a combination of two or more thereof.

Of the above-mentioned catalysts, chloroplatinic acid, the platinum-olefin complex, the platinum-vinylsiloxane complex, Pt(acac)₂ and the like are preferred in terms of catalytic activity, and further, the platinum-vinylsiloxane complex is more preferred. Although there is no particular limitation on the amount of the catalyst, it may be used within the range of 10⁻¹ to 10⁻⁸ mol per mol of the alkenyl group of vinyl-based polymer (a). Preferably, it may be used within the range of 10⁻² to 10⁻⁶ mol. Further, the hydrosilylation catalyst is generally expensive, has corrosiveness, and generates hydrogen gas in large amounts to foam the cured material in some cases, so that it should not be used in an amount of 10⁻¹ mol or more.

When the transition metal catalyst is used as the hydrosilylation catalyst in the curable composition of the invention, it is preferred to add an aliphatic unsaturated bond-containing compound as a component for producing a so-called heat curable type which does not react during storage at room temperature and initiates the reaction on heating. This aliphatic unsaturated bond-containing compound is already known as an inhibiter of hydrosilylation reaction, and an acetylene compound is used. However, in the case of a two-component mixing type which initiates the reaction as soon as two components are mixed, not using the heat curable type, the addition thereof is not necessary.

Further, in the invention, it is preferred to add an inorganic filler as well as component (c), in order to improve physical properties of the cured material. Although there is no particular limitation on the inorganic filler, examples thereof include inorganic compounds such as calcium carbonate, aluminum oxide, carbon black, kaolin, clay, activated clay, silica sand, quartzite, diatomaceous earth, anhydrous aluminum silicate, hydrated magnesium silicate, talc, perlite, white carbon, fine mica powder, bentonite, organic bentonite and finely powdered silica. The above-mentioned inorganic fillers may be surface-treated with a fatty acid or a resin acid.

Further, in addition to the above-mentioned components, reactive diluents described bellow may be used in the invention. The reactive diluents include an organic compound having in its molecule at least one alkenyl group or alkynyl group which can be hydrosilylated. This compound decreases the viscosity of the composition before curing, and bonds to an Si-H group of organohydrogenpolysiloxane (b) at the time of curing reaction by hydrosilylation reaction to be finally incorporated into a network structure. In the invention, therefore, there is no particular limitation, as long as it is an organic compound having in its molecule at least one alkenyl group or alkynyl group which can be hydrosilylated. However, from the viewpoint of good compatibility with vinyl-based polymer (a) of the invention, a compound having a polar group such as an ester group is preferred. Further, the lower molecular weight is preferred because of easier compatibility. However, the molecular weight may be high to some extent, as long as it is sufficiently compatible. Furthermore, from the viewpoints of heat resistance, weather resistance and the like which are characteristics of the composition of the invention, it is more preferred that a carbon-carbon unsaturated bond having low activity to hydrosilylation is not contained in this reactive diluent compound. When such a low boiling compound as can volatilize during curing and aging is used, changes in form occur between before and after curing, or volatile matter has an adverse environmental effect. Accordingly, an organic compound having a boiling point at ordinary temperature of 100°C or more is particularly preferred. Specific examples of the reactive diluent compounds include but are not limited to 1-octene, 4-vinylcyclohexene, allyl acetate, 1,1-diacetoxy-2-propene, methyl 1-undecenoate, 8-acetoxy-1,6-octadiene and the like.

On the other hand, there is no particular limitation on the amount of the reactive diluent compound added, as long as it is within such a range that the formation of a three-dimensional crosslinked structure by the hydrosilylation reaction of component (a) and component (b) is not disturbed. That is to say, when the amount of the reactive diluent compound added becomes excessive, the Si-H group of component (b) is consumed by the hydrosilylation reaction with an unsaturated group of the reactive diluent compound, and the formation of the three-dimensional crosslinked structure with component (a) becomes insufficient in some cases. The reactive diluent compound is preferably used in an amount of 0.1 to 100 parts by weight, preferably 0.5 to 70 parts by weight, particularly 1 to 50 parts by weight, based on 100 parts by weight of vinyl-based compound (a).

Further, in the invention, it is preferred to add an adhesiveness-imparting agent. The adhesiveness-imparting agents incorporatable include silane coupling agents. Specific examples thereof include alkylalkoxysilanes such as methyltrimethoxysilane, dimethyldimethoxysilane, trimethylmethoxysilane and n-propyltrimethoxysilane; alkyl-isopropenoxysilanes such as dimethyldiisopropenoxysilane and methyltriisopropenoxysilane; and vinyl type unsaturated group-containing silanes such as vinyltrimethoxysilane, vinyldimethylmethoxysilane, vinyltriethoxysilane, γ-methacryloyloxypropylmethyldimethoxysilane and γ-acryloyloxypropylmethyltriethoxysilane.

The curing reaction of component (a) and component (b) proceeds by mixing two components and heating the resulting mixture. In order to allow the reaction to proceed more rapidly, the hydrosilylation catalyst such as the above-mentioned transition metal catalyst can be added. The hydrosilylation catalysts may be used either alone, or as a combination of two or more thereof. Further, although there is no particular limitation, it is preferred to add an aliphatic unsaturated bond-containing compound or amine compound for adjustment of curability or for storage stability.

Although there is no particular limitation on the curing temperature, curing is performed generally at 10°C to 200°C, preferably at 30°C to 150°C, and more preferably at 80°C to 150°C. The curable composition can be obtained for a short period of time thereby.

In addition, the addition reaction of the Si-H group to the alkenyl group using the above-mentioned noble metal catalyst is convenient for performing line production, because the curing speed is extremely fast. In this case, it is preferred to further add the above-mentioned aliphatic unsaturated bond-containing compound or amine compound to this hydrosilylation catalyst, and to perform heat curing within the range of 100°C to 180°C. The curing reaction scarcely proceeds at a temperature lower than 100°C, because the composition is excellent in storage stability. However, the hydrosilylation reaction rapidly proceeds at about 100°C or higher, and the cured material is obtained for a short period of time.

Further, the two-component mixing curable type can also be selected as desired. In this case, a two-liquid form of a first liquid component and a second liquid component in which component (a) and component (b) are allowed to separately exist is employed (component (c) may be contained in either the first liquid component or the second liquid component), and these two liquid components are mixed immediately before coating and applied, thereby being able to perform curing without requiring heating or by heating at low temperature. However, the compounding ratios of components (a) to (c) are largely different, so that when the accuracy of a mixer is low, variation in each mixed amount occurs to also cause fluctuation in performance of the cured material. It is therefore necessary to pay attention to the control of a mixing coater. For this reason, when used in a production line, the heat curable type is easier.

The above-mentioned curable composition can be formed as a sealing agent, using the following molding methods. That is to say, a flange as an article to be sealed is coated with the above-mentioned curable composition in bead form by an automatic coater or the like. It is preferred to select as the automatic coater one in which a two-dimensional operation or a three-dimensional operation is possible, and to previously teach a form of the article to be sealed. The applied curable composition and the article to be sealed are heated, thereby curing the curable composition. At this time, it may be cured as applied in bead form. However, a surface of the bead applied material may be covered with a covering mold or the like, followed by heat curing. As the covering mold, there can be used one shown, for example, in JP-A-60-237267. It is necessary that hollow grooves are formed on the covering mold, and that the sealing agent formed is adjusted so as to convexly protrude from the flange surface. A surface of the sealing agent cured by the covering mold is smoothened, and the height and width of the convex also become constant. Further, in coating with a nozzle, a seam is liable to occur between a coating initiation position and a coating termination position, but there is a merit that uniform compensation is performed by forming with the covering mold. However, the covering mold is not necessarily required, when formed in bead form.

The sealing agent formed as described above joins the flange portions of the opposed articles to be sealed, and pressure contact is performed. At this time, in order to exert a reliable sealing effect, pressure contact is preferably performed by such force that the compressibility of the sealing agent becomes a compression of 10% or more. The preferred compressibility is from 20 to 40%. The sealing agent which has cured the curable composition of the invention has low compression set, so that repulsive force is not lost, even when such compression is performed in high-temperature environment for a long time, thus being able to exert highly reliable sealing performance.

### Examples

Specific examples of the present invention will be illustrated below in conjunction with comparative examples. In addition, all the "parts" and "%" in the following examples and comparative examples are given by weight.

In the following examples, the "number average molecular weight" and "molecular weight distribution (the ratio of the weight average molecular weight and the number average molecular weight)" were calculated by a standard polystyrene conversion method using gel permeation chromatography (GPC), provided that two columns filled with a crosslinked styrene gel (Shodex GPCK-802.5 manufactured by Show Denko K.K. and Shodex GPCK-804 manufactured by Show Denko K.K.) were connected in series to use as GPC columns, and chloroform was used as a GPC solvent.

### (Production Example 1)

A 10-liter separable flask equipped with a reflux tube and a stirrer was charged with CuBr (36.02 g, 0.2511mol), and the inside of the reaction vessel was replaced with nitrogen. Acetonitrile (618 ml) was added, followed by stirring at 70°C for 15 minutes in an oil bath. Butyl acrylate (360 ml, 2.51 mol), ethyl acrylate (500 ml, 4.62 mol), 2-methoxyethyl acrylate (375 ml, 2.91 mol), diethyl 2,5-dibromoadipate (150.68 g, 0.419 mol) and pentamethyldiethylenetriamine (2.18 ml, 1.81 g, 10.46 mmol) (hereinafter represented as triamine) were added thereto, and the reaction was initiated. A mixed solution of butyl acrylate (1440 ml), ethyl acrylate (2002 ml) and 2-methoxyethyl acrylate (1498 ml) was continuously added dropwise with heating and stirring at 70°C, taking 210 minutes. Triamine (7.63 ml, 6.33 g, 36.5 mmol) was added in the course of dropping of the monomers. After an elapse of 330 minutes from the initiation of the reaction 1,7-octadiene (1236 ml, 922 g, 8.37 mol) and triamine (26.16 ml, 21.71 g, 0.125 mol)were added, subsequently followed by heating and stirring at 70°C for 250 minutes.

A reaction mixture was diluted with toluene, and allowed to pass through an active alumina column, and then, volatile matter was removed by distillation under reduced pressure, thereby obtaining an alkenyl group terminal copolymer (an alkenyl terminal-containing copolymer of butyl acrylate, ethyl acrylate and methoxyethyl acrylate: copolymer [1]).

A 10-liter separable flask equipped with a reflux tube was charged with copolymer [1] (2.87 kg), potassium acetate (79.57 g) and N,N-dimethylacetamide (2.9 1), followed by heating and stirring under a nitrogen stream at 100°C for 12 hours. N,N-dimethylacetamide was removed under heating and reduced pressure, and then, dilution with toluene was performed. Solid matter insoluble in toluene (KBr and excess potassium acetate) was filtered through an active alumina column. Volatile matter of a filtrate was removed by distillation under reduced pressure, thereby obtaining copolymer [2].

A 10-liter separable flask equipped with a reflux tube was charged with copolymer [2] (2.87 kg), acid aluminum silicate (143 g, manufactured by Kyowa Chemical Industry Co., Ltd., Kyoward 500SH) and toluene (5.2 1), followed by heating and stirring under a nitrogen stream at 100°C for 7 hours. An adsorbent was removed by filtration, and then, toluene of a filtrate was removed by distillation under reduced pressure, thereby obtaining a vinyl group terminal copolymer (copolymer [3]). The number average molecular weight of the resulting copolymer was 18000 by the GPC measurement (in terms of polystyrene), and the molecular weight distribution was 1.24. The average number of vinyl groups introduced per molecule of the copolymer was determined by 1H NMR analysis. As a result, it was 2.2 groups.

### (Examples and Comparative Examples)

A chain siloxane (containing, in its molecule, 5 hydrosilyl groups on average and 5 α-methylstyrene groups on average, the amount of Si-H group: 3.70 mmol/g) as component (b) was added to 100 parts by weight copolymer [3] (alkenyl group: 0.158 mmol/g) obtained in Production Example 1 as component (a) in such an amount that the SiH group of the chain siloxane became 2.32 equivalents of the alkenyl group of copolymer [3], followed by thorough stirring. Further, a bis(1,3-divinyl-1,1,3,3-tetramethyldisiloxane)platinum complex catalyst (a 1.32×10⁻⁵ mmol/µl xylene solution, such an amount that platinum became 1×10⁻³ equivalent (molar ratio) based on the alkenyl group), and 10 parts by weight of a silica powder (Aerosil R972 (manufactured by Nippon Aerosil Co., Ltd.)) and 45 parts by weight of calcium carbonate as inorganic fillers were added. The resulting one was taken as composition A. Trefil E-600 (manufactured by Toray Industries, Inc.) was added to composition A in an amount described in Table as a fine spherical particle powder of a three-dimensionally crosslinked silicone resin. These were thoroughly mixed by a planetary mixer, and then, defoamed to obtain a curable composition. Further, as Comparative Examples, one in which the fine spherical particle powder of the three-dimensionally crosslinked silicone resin was not added, and one in which Microsphare (manufactured by Matsumoto Yushi-Seiyaku Co., Ltd.) which is microballoon was added and one in which Stafiloid (manufactured by Takeda Chemical Industries, Ltd.) was added as fine core-cell particles, as similar ones, were similarly prepared.

In addition, one in which 90 parts by weight of OR100A (manufactured by Kanegafuchi Chemical Industry Co., Ltd.) as an acrylic copolymer having vinyl groups at both terminals, 4.82 parts by weight of CR500 as a hydrosilyl group-containable material, further a bis(1,3-divinyl-1,1,3,3-tetramethyldisiloxane)platinum complex catalyst (a 1.32×10⁻⁵ mmol/µl xylene solution, such an amount that platinum became 1×10⁻³ equivalent (molar ratio) based on the alkenyl group), and 10 parts by weight of a silica powder (Aerosil R972 (manufactured by Nippon Aerosil Co., Ltd.)) and 45 parts by weight of calcium carbonate as inorganic fillers were added was taken as composition B. Similarly, 10 parts by weight of Trefil E-500 (manufactured by Toray Industries, Inc.) was added to composition B as a fine spherical particle powder of a three-dimensionally crosslinked silicone resin. These were thoroughly mixed by a planetary mixer, and then, defoamed to obtain a curable composition.

The resulting respective compositions were tested based on the compression set test method specified in JIS K 6820, provided that the compressibility was 25%, the test temperature was 150°C, and the time was 168 hours.

Further, the test was conducted using a flange pressure vessel for pressure tests specified in JIS K 6820 as an experimental apparatus. Each curable composition was applied to an approximately center portion of a flange of a lower vessel of this simulated vessel, circularly along a flange form at a bead width of 5 mm and a height of 3 mm. Then, heating was performed at 120°C for 60 minutes to form a sealing agent.

The sealing agent was compressed by allowing the flange of the lower vessel on which the sealing agent was formed to face to a flange of an upper vessel and fastening them using a bolt. The fastening was carried out until the compressibility of the sealing agent reached about 30%. Then, an SG5W-30 engine oil was fully poured into the vessel through a hole formed at a bottom portion of the lower vessel, and the hole was sealed. This was placed in a heating furnace of 150°C, and heated for 1000 hours. The inner pressure in the vessel has increased by heating.

After the heating was finished, a flange joint was visually observed without disassembling the vessel to confirm leakage of the engine oil, and a white powder was sprinkled on the flange joint to confirm the presence or absence of the sweating phenomenon. The results thereof are shown in Table 1.

**[Table 1]**

| | Example 1 | Example 2 | Example 3 | Comparative Example 1 | Comparative Example 2 | Comparative Example 3 | Example 4 |
|---|---|---|---|---|---|---|---|
| Composition A | 100 | 100 | 100 | 100 | 100 | 100 | |
| Composition B | | | | | | | 100 |
| Trefil E-600 | 5 | 10 | 15 | | | | |
| Trefil E-500 | | | | | | | 10 |
| Microballoon | | | | | 10 | | |
| Core-Shell Particles | | | | | | 10 | |
| Compression Set | 30.8 | 25.9 | 22.3 | 85.1 | 71.9 | 70.2 | 21.3 |
| Leakage Test | ○ | ○ | ○ | ○ | ○ | ○ | ○ |
| Sweating Test | ○ | ○ | ○ | × | × | × | ○ |

### Industrial Applicability

The curable composition of the invention suitable for on-site forming gaskets, particularly for on-site forming gaskets of the CIPG method, and can be utilized in various applications such as sealing agents for automotive oil pans, locker covers and the like, sealing materials in architectural elastic sealing materials, sealing materials for double glass and the like, materials for electric and electronic parts such as solar battery backside sealants. Further, the curable composition of the invention has low compression set, and is applicable not only for the above-mentioned applications, but also for the following applications. For example, in the automotive filed, as body parts, it can be used in materials for preventing vibration of glass and vibration-proof materials for body sites, particularly in window seal gaskets and door glass gaskets. As chassis parts, it can be used in engines for vibration insulation and sound insulation, and suspension rubbers, particularly engine mount rubbers. As engine parts, it can be used in hoses for cooling, fuel supply, exhaust control and the like, sealing materials for engine oils and the like. Further, it can also be used in exhaust gas purifier parts and brake parts. In the appliance field, it can be used in packings, O-rings, belts and the like. Specifically, they include ornaments, waterproof packings, vibration-proof rubbers and insect-proof packings for lighting fixtures, vibration insulation-sound insulation and air sealing materials for cleaners, drip-proof covers, waterproof packings, heater portion packings, electrode portion packings and safety valve diaphragms for electric water heaters, hoses, waterproof packings and electromagnetic valves for sake warmers, waterproof packings, feed tank packings, water absorption valves, catch packings, connecting hoses, belts, warm keeping heater portion packings, steam spout seals and the like for steam oven ranges and jar rice cookers, oil packings, O-rings, drain packings, pressure tubes, blast tubes, air supply-intake packings, vibration-proof rubbers, fuel inlet packings, fuel level indicator packings, oil feed pipes, diaphragm valves, air pipes and the like for burning appliances, and speaker gaskets, speaker edges, turn table sheets, belts, pulleys and the like for acoustic instruments. In the building field, it can be used in structural gaskets (zipper gaskets), materials for pneumatic structure roofs, waterproof materials, formed sealing materials, vibration-proof materials, soundproof materials, setting blocks, sliding materials and the like. In the sports field, it can be used in all-weather type paving materials, gym floors and the like as sports floors, shoe sole materials, inner sole materials and the like as sports shoes, and golf balls as balls for ball sports. In the vibration-proof rubber field, it can be used in automotive vibration-proof rubbers, vibration-proof rubbers for railway vehicles, aircraft vibration-proof rubbers, fender beams and the like. In the ocean and civil engineering fields, it can be used in rubber expansion joints, supports, waterstops, waterproof sheets, rubber dams, elastic pavements, vibration-proof pads, shields and the like as structural materials, rubber frames, rubber packers, rubber skirts, sponge mats, mortar hoses, mortar strainers and the like as construction associate materials, rubber sheets, air hoses and the like as construction subsidiary materials, rubber buoys, wave-dissipating as safety products, and oil fences, silt fences, antifouling materials, marine hoses, dredging hose, oil skimmers and the like as environmental protection products. In addition, it can also be used in rubber plates, mats, foam plates and the like.

## Claims

1. A curable composition comprising
(a) a (meth)acrylic acid-based polymer containing at least one alkenyl group in a molecule, which can be hydrosilylated, and having a number average molecular weight of 500 to 1,000,000,
(b) an organohydrogenpolysiloxane, and
(c) a silicone powder.

2. The curable composition according to claim 1, wherein component (a) is one produced by living radical polymerization of a (meth)acrylic acid-based polymer.

3. The curable composition according to claim 1 or 2, wherein the component (b) is added in an amount giving 0.5 to 1.5 equivalents based on one alkenyl group contained in the component (a).

4. The curable composition according to any one of claims 1 to 3, the component (c) is added in an amount of 5 to 30 parts by weight based on 100 parts by weight of the component (a).

5. The curable composition according to any one of claims 1 to 4, further containing a hydrosilylation catalyst.

6. The curable composition according to claim 1, wherein the hydrosilylation catalyst consists of at least one selected from chloroplatinic acid, the platinum-olefin complex, the platinum-vinylsiloxane complex and Pt(acac)₂.

7. A sealing method comprising the steps of applying the curable composition according to any one of claims 1 to 6 to at least one side of an article to be sealed, curing the composition at 80°C to 150°C after coating, and then, performing pressure contact with the other article to be sealed.

## Patentansprüche

1. Härtbare Zusammensetzung umfassend
(a) ein (Meth)acrylsäure-basiertes Polymer, enthaltend mindestens eine Alkenylgruppe in einem Molekül, die hydrosilyliert werden kann, und mit einem zahlengemittelten Molekulargewicht von 500 bis 1.000.000,
(b) ein Organohydrogenpolysiloxan, und
(c) ein Silikonpulver.

2. Härtbare Zusammensetzung nach Anspruch 1, wobei Komponente (a) eine ist, die durch lebende Radikalpolymerisation von einem (Meth)acrylsäure-basierten Polymer hergestellt wird.

3. Härtbare Zusammensetzung nach Anspruch 1 oder 2, wobei die Komponente (b) in einer Menge zugegeben wird, die 0,5 bis 1,5 Äquivalente basierend auf einer Alkenylgruppe, die in der Komponente (a) enthalten ist, ergibt.

4. Härtbare Zusammensetzung nach einem der Ansprüche 1 bis 3, wobei die Komponente (c) in einer Menge von 5 bis 30 Gew.-Teilen, basierend auf 100 Gew.-Teilen der Komponente (a), zugegeben wird.

5. Härtbare Zusammensetzung nach einem der Ansprüche 1 bis 4, weiter enthaltend einen Hydrosilylierungskatalysator.

6. Härtbare Zusammensetzung nach Anspruch 1, wobei der Hydrosilylierungskatalysator aus mindestens einem ausgewählt aus Chlorplatinsäure, einem Platin-Olefinkomplex, einem Platin-Vinylsiloxankomplex und Pt(acac)₂ besteht.

7. Versiegelungsverfahren, umfassend die Schritte des Auftragens der härtbaren Zusammensetzung nach einem der Ansprüche 1 bis 6 auf mindestens eine Seite eines zu versiegelnden Gegenstands, Härten der Zusammensetzung bei 80°C bis 150°C nach Beschichten und dann Ausüben von Druckkontakt mit dem anderen zu versiegelnden Gegenstand.

## Revendications

1. Composition durcisseur comprenant
(a) un polymère à base d'acide (méth)acrylique comprenant au moins un groupe alcényle dans une molécule, qui peut être hydrosilylé, et ayant un poids moléculaire moyen en nombre de 500 à 1.000.000,
(b) un organohydrogènepolysiloxane et
(c) une poudre de silicone.

2. Composition durcisseur selon la revendication 1, **caractérisée en ce que** la composante (a) en est une produite par polymérisation radicalaire vivante d'un polymère à base d'acide (méth)acrylique.

3. Composition durcisseur selon la revendication 1 ou 2, **caractérisée en ce que** la composante (b) est ajoutée en une quantité donnant 0,5 à 1,5 équivalences sur la base d'un groupe alcényle compris dans la composante (a).

4. Composition durcisseur selon l'une des revendications 1 à 3, **caractérisée en ce que** la composante (c) est ajoutée en une quantité de 5 à 30 parts en poids sur la base de 100 parts en poids de la composante (a).

5. Composition durcisseur selon l'une quelconque des revendications 1 à 4, comprenant en outre un catalyseur d'hydrosilylation.

6. Composition durcisseur selon la revendication 1, **caractérisée en ce que** le catalyseur d'hydrosilylation consiste en au moins un choisi parmi acide chloroplatinique, le complexe de platine-oléfine, le complexe de platine-vinylsiloxane et Pt(acac)₂.

7. Procédé d'étanchéisation comprenant les étapes d'appliquer la composition durcisseur selon l'une quelconque des revendications 1 à 6 sur au moins un côté d'un article à rendre étanche, durcir la composition à 80 °C à 150 °C après application du revêtement et puis mettre en ouvre un contact sous pression avec l'autre article à rendre étanche.
